# EUROPEAN PATENT SPECIFICATION

(11) **EP 0 761 952 B1**
(45) Date of publication and mention of the grant of the patent: **18.06.2003**
(21) Application number: 96113954.0
(22) Date of filing: 30.08.1996
(51) Int. Cl.: F02D 37/02, F02D 41/34

(54) **Control method for an internal combustion engine**
Verfahren zur Regelung eines Innenverbrennungsmotors
Méthode de régulation pour moteur à combustion interne

(30) Priority: 30.08.1995 JP 22221695; 30.08.1995 JP 22221895
(43) Date of publication of application: 12.03.1997
(73) Proprietor: YAMAHA HATSUDOKI KABUSHIKI KAISHA, Iwata-shi Shizuoka-ken, 438 (JP)
(72) Inventor: Motoyama, Yu, Iwata-shi, Shizuoka-ken, 438 (JP)
(74) Representative: Grünecker, Kinkeldey, Stockmair & Schwanhäusser Anwaltssozietät

(56) References cited:
- US-A- 4 732 126
- US-A- 4 936 277
- US-A- 5 211 150
- US-A- 5 239 965
- US-A- 5 329 907

## Description

The present invention relates to a control method for an internal combustion engine, in particular a two stroke engine internal combustion engine, and moreover to an internal combustion engine according to the independent claim 9.

Two stroke engines complete one cycle by one revolution of the crankshaft, i.e., one reciprocation of the piston corresponds to two piston strokes. Since combustion occurs for each revolution, compared with a four stroke engine wherein combustion occurs only in one or two revolutions, the torque fluctuations in two stroke engines are lower and the torque characteristics are smoother at the same average torque level.

Since there is one combustion cycle in a cylinder for each revolution of the crankshaft the torque per engine revolution in a two stroke engine is smaller than in a four stroke engine having the same average torque. As a result, in particular the two stroke engine is susceptible to stalling during starting or when operated in a low speed/mid to high load operating range. Further, especially when operated at low to mid speed and mid to high loads and driver's or rider's sensation of traction that is his feeling of acceleration is inferior. Furthermore, if temporary high loads are caused the engine is susceptible to stalling, for example, when the internal combustion engine is applied to an off-road motor cycle and when climbing a hill or riding over a rock the with that motor cycle.

US-A-4 936 277 discloses a control method for an internal combustion engine, including a two-stroke engine, in association with each of the individual cylinders, wherein individual cylinder-associated power signals are generated and the individual cylinder-associated signals are compared to each other so as to determine if there is a power mismatch between the power produced by each of the engine cylinders.

Furthermore, US-A-4 936 277 discloses an internal combustion engine comprising means for storing an array of individual cylinder instantaneous speed/tooth period data, means for detecting fuel injection and fuel metering control signals and process block to adjust cylinder power according to said detected signals.

It is an objective of the present invention to provide a method for controlling an internal combustion engine that improves the traction of a vehicle powered by said engine. Moreover, it is an objective of the present invention to provide an internal combustion engine that runs smoothly to improve traction and that is prevented from stalling.

This objective is solved according to the method aspect of the present invention by a control method for an internal combustion engine, in particular a two-stroke internal combustion engine, in response to engine operation conditions wherein the combustion cycles are controlled individually and the torque generated by subsequent combustion cycles is varied, wherein an engine speed and an actual throttle aperture are detected, at least one throttle aperture threshold value is determined on the basis of the engine speed, and the throttle aperture and said at least one threshold value are compared, if a condition is detected in which the throttle aperture is greater than the threshold value the ignition timing is delayed and/or the amount of fuel supplied is corrected in a corresponding combustion cycle.

Moreover, this objective is solved according to the apparatus aspect of the present invention by an internal combustion engine, in particular a two-stroke internal combustion engine having means for detecting the operating conditions of the engine, wherein said operating state detection means comprises a RPM detection means that detects the engine RPM, means for generating at least one standard engine control parameter, means for correcting said at least one engine control parameter to thereby vary the torque generated by subsequent combustion cycles, wherein said operating state detection means comprises an aperture detection means that detects a throttle aperture, means for generating at least one throttle aperture threshold on the basis of said engine RPM detected and comparing same with the actual throttle aperture, said means for correcting said at least one standard control parameter is capable, if the throttle aperture detected is larger than the threshold throttle aperture generated, to delay the ignition timing and/or to correct the amount of fuel supplied in a corresponding combustion cycle.

By this engine running can be stabilised. The engine is controlled in response to its operation conditions. In each combustion cycle a predetermined torque can be generated which, as the combustion cycles are controlled individually, differs for subsequent combustion cycles. The predetermined torque thus varies with respect to an average torque computed on the basis of several subsequent combustion cycles. The torque peaks, being higher than an a desired average torque, provides smooth engine running while the torque valleys keep the average torque at the desired level.

Preferably, the combustion cycles are controlled individually at low to mid range speed and mid to high load. The torque generated in subsequent cycles of a cylinder varies between low and high values when the crankshaft is rotating at a low number of revolutions per minute, which keeps the engine running under these low speed conditions and prevents it from stalling.

This effect can be achieved either by correcting the timing of ignition or by correcting the amount fuel supplied to a cylinder. It would also be possible to combine both methods or corresponding apparatus in order to achieve the desired effect.

Even though this method is preferably applied to two stroke internal combustion engines, it can be applied to four stroke engines.

As the corrected ignition timing and corrected amount of fuel are computed with respect to a standard ignition timing or standard amount of fuel the method can be applied to known engines or methods of controlling combustion cycles in internal combustion engines without difficulty.

Preferably if a condition throttle aperture greater than said at least one threshold value is detected the standard engine control parameter is corrected by the correcting means, so that it is possible to control the engine upon a certain level onwards in a different way. Even though the torque generated is varied over several subsequent combustion cycles this does not exclude the possibility that the torque in two consecutive combustion cycles is at an identical level.

According to a preferred embodiment a flag can be set, in order to control the ignition timing and/or an amount of fuel to be supplied in subsequent combustion cycles. The flag can take at least two flag values, each flag value corresponding to a predetermined ignition timing or amount of fuel, respectively, the flag being changed each time the condition throttle aperture greater than at least one threshold value has been detected. By this the timing or the amount of fuel will be changed in subsequent combustion cycles once the throttle aperture exceeds a predetermined area. When a throttle valve is used in the intake duct this area corresponds to an angle of the throttle valve.

In order to provide a smooth torque line over the throttle aperture which in turn depends on the angle of an accelerator pedal or a grip handle, additional fuel is injected when the actual throttle aperture is greater than the threshold value.

According to the invention the average torque generated can be lower than a standard torque normally required to keep the engine running smoothly, which, however, may often be too high and thus cause spinning of the wheels of a vehicle powered by the engine. Thus, by the invention the traction can be improved and at the same time the engine can operate smoothly even at a torque level lower than said standard torque.

Further advantageous embodiments of the invention can be derived from the subclaims.

Preferred embodiments of the invention will now be described by way of non limiting examples in connection with the drawings, wherein:
**Figure 1** is a structural diagram of a two-cycle engine embodiment equipped with the ignition-timing control apparatus of this invention.
**Figure 2** is a graph of the foregoing engine embodiment's rpm vs. load in the engine operating range where the ignition timing is corrected.
**Figure 3** is a graph of the foregoing engine embodiment's rpm vs. load in the engine operating range where the ignition timing is corrected.
**Figure 4** is a graph showing the relationship between the ignition timing and the combustion pressure for the foregoing engine embodiment.
**Figure 5** is a flow chart used to explain the control operations for the ignition timing adjustment for the foregoing engine embodiment.
**Figure 6** is a graph of the relationship between the engine cycle number and the torque for the foregoing engine embodiment.
**Figure 7** is a graph of the relationship between the throttle aperture and the torque for the foregoing engine embodiment.
**Figure 8** is a graph of the relationship between the throttle aperture and the torque for the foregoing engine embodiment.
**Figure 9** is a graph of the relationship among the throttle aperture, the amount of fuel injection, and the torque of a modified engine embodiment.
**Figure 10** is a graph showing the relationship among the accelerator input and the throttle aperture, the amount of fuel injection, and the torque for another modified engine embodiment.
**Figure 11** is a flow chart used to explain the operation of the second embodiment of a control unit.
**Figure 12** is a graph showing the relationship between the cycle number and the torque, namely the control effects of the foregoing second embodiment of a control unit.
**Figure 13** is a flow chart used to explain the operation of a third embodiment of a control unit.
**Figure 14** is a graph of the engine rpm and load in the operating range where ignition-timing correction control is exercised.
**Figure 15** is a graph of the engine rpm and load in the operating range where ignition-timing correction control is exercised.
**Figure 16** a graph of another engine embodiment's rpm vs. load in the engine operating range where the amount of fuel injection is corrected.
**Figure 17** is a graph of the foregoing engine embodiment's rpm vs. load in the engine operating range where the amount of fuel injection is corrected.
**Figure 18** is a graph of the amount of fuel injection per cycle for the foregoing engine embodiment.
**Figure 19** is a flow chart used to explain the control operations for the foregoing engine embodiment.
**Figure 20** is a three dimensional map showing the relationship between the engine rpm, throttle aperture, and standard amount of fuel injection for the foregoing engine embodiment.
**Figure 21** is a map of the relationship between engine rpm and threshold aperture for the foregoing engine embodiment.
**Figure 22** is a graph of the relationship between load and torque for the foregoing engine embodiment.
**Figure 23** is a graph showing the torque per cycle of the foregoing engine embodiment.
**Figure 24** is a graph showing the relationship between throttle aperture and torque of the foregoing engine embodiment.
**Figure 25** is a graph showing the relationship between throttle aperture and torque for the foregoing engine embodiment.

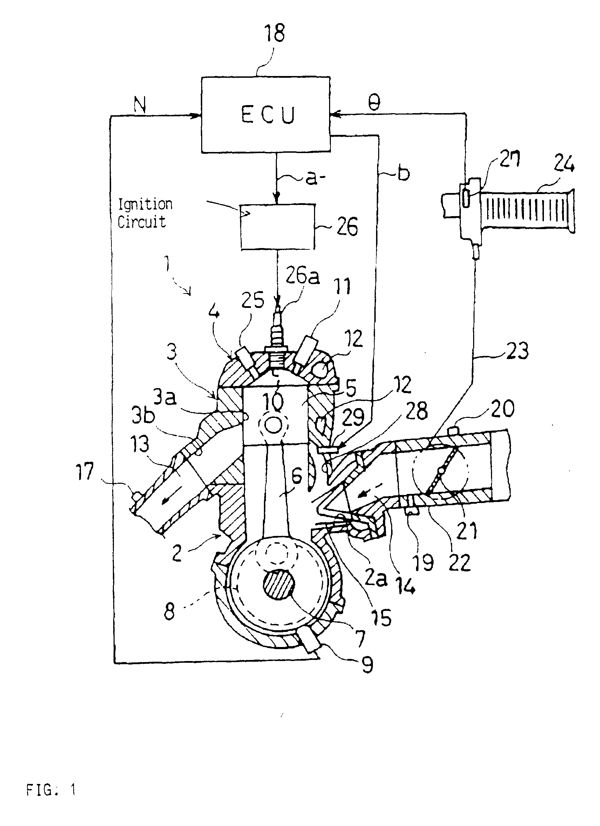

Figure 1 is a structural diagram of a crank chamber compression model of two-cycle engine to which the present invention has been applied. This engine 1 consists of a crankcase 2, a cylinder block 3 mounted on top of it, and a cylinder head 4.

A piston 5 has been slidably inserted into the cylinder bore 3a of the foregoing cylinder block 3; it is connected to the crank shaft 7 by the connecting rod 6. There is a ring gear 8 with a specific number of teeth attached to the crankshaft 8, and a combination engine rpm sensor and crank angle sensor 9 detects the position on this ring gear in order that the crank angle and engine rpm can be calculated.

There are a combustion chamber pressure sensor 11 and a temperature sensor 25 mounted in the cylinder head 4 which detect the combustion pressure and temperature inside the combustion chamber 10. The combustion pressure information and temperature information for said combustion chamber 10, as well as the engine rpm signal N from the foregoing crank angle sensor 9, are transmitted to a control unit 18 (ECU) that controls the operating state of the engine.

A spark plug 26a is attached in the foregoing cylinder head 4; an ignition timing signal α from the foregoing control unit 18, causes an ignition circuit 26 to provide high voltage, which is controlled in the below described ranges, to said spark plug 26a. 12 is a cooling jacket that surrounds the foregoing combustion chamber 10 and the cylinder bore.

An exhaust pipe 13 is attached to the exhaust port 3a of the foregoing cylinder block 3, and an exhaust temperature sensor 17 is mounted inside said exhaust pipe. The detection signal from said sensor 17 is fed into the foregoing control unit 18.

The air intake passage 14 is connected to the air intake port 2a that opens into the foregoing crankcase 2, and a reed valve 15 is installed in the opening where said connection is made. A throttle body 22 with an affixed throttle valve is located in the foregoing air intake passage 14. There are an air intake pipe pressure sensor 19 and air intake temperature sensor 20 mounted in said throttle body, which feed the intake air pressure information and intake air temperature information into the foregoing control unit 18.

The foregoing throttle valve 21 is connected by means of a wire 23 to the throttle grip 24, and turning said throttle grip adjusts the aperture of the throttle valve. Said throttle aperture is detected by the throttle aperture sensor 27, which feeds the throttle aperture signal θ into the foregoing control unit 18. Further, there is also an air intake volume sensor (not shown) mounted inside the foregoing air intake passage 14, which sends information on the air intake volume to the foregoing control unit 18.

A scavenging port 28 connects the inside of the foregoing crankcase 2 to the inside of the foregoing cylinder bore 3a. Inside said scavenging port28 is an injector that injects fuel into the foregoing cylinder bore 3a. The amount of fuel injection and the injection timing by this injector 29 is controlled by the fuel injection signal b according to the operating state of the engine. A clutch apparatus and a transmission not shown in the figures are attached to the engine 1, and the output of the crankshaft 7 is transmitted through this clutch and transmission and a chain drive apparatus (not shown) to the rear wheel.

Next, the ignition-timing control by the foregoing control unit will be explained.

This ignition-timing control is performed by determining the optimal standard ignition timing (for example, 20 degrees before top dead center) from a three-dimensional map of engine rpm, throttle aperture and ignition timing based upon the engine operating state determined by the engine rpm N and the throttle aperture θ (load). The ignition circuit 26, and hence the spark plug 26a are controlled accordingly.

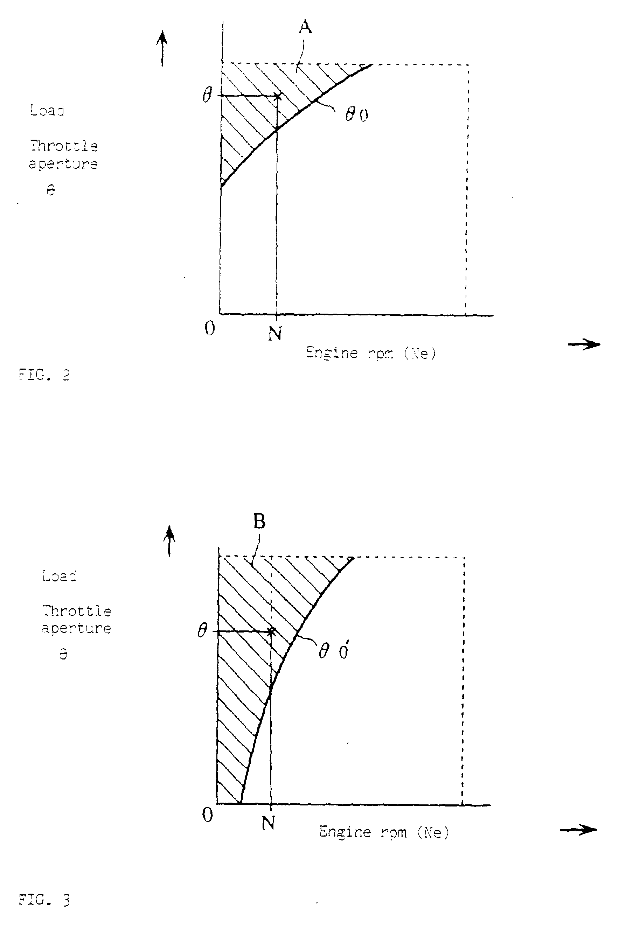

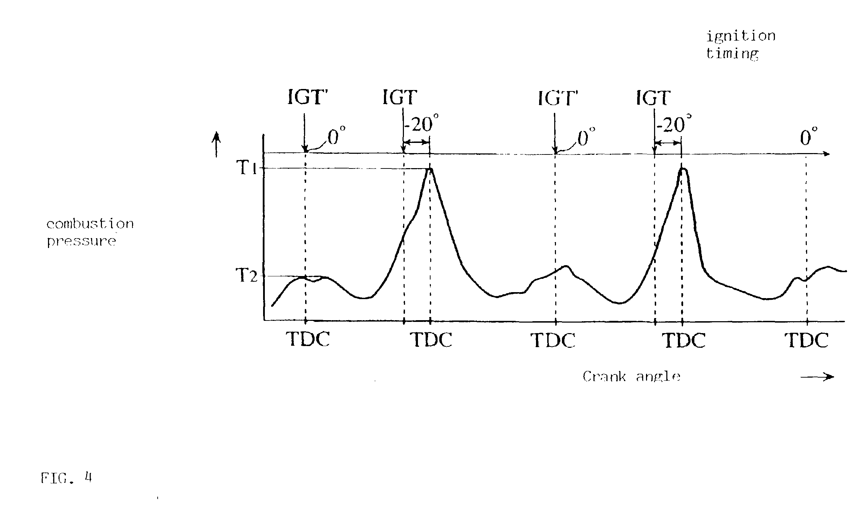

On the other hand, as is shown by the shaded area A in Figure 2, in the engine operating range upward from the threshold value θ₀, that is, in the low to mid rpm and mid to high engine load range, in order to generate a torque magnitude as shown in Figure 4, an ignition timing delay correction (for example to top dead center 0 degrees) is performed for each prescribed cycle (for example each cycle).

The foregoing ignition-timing correction control can be varied appropriately according to the engine application and characteristics. For example, the control could be exercised over the operating range shown by the shaded area B in Figure 3. In that case, the foregoing correction control would be exercised whenever the rpm decreased below a certain level, even if there were no load. So doing prevents the engine from stalling during starting.

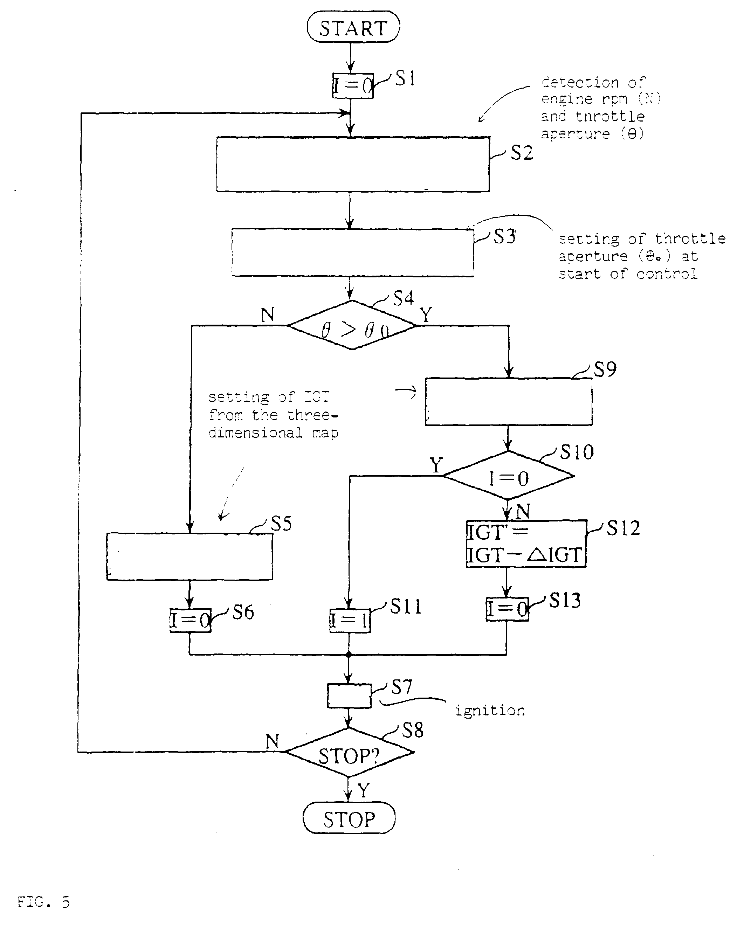

The foregoing ignition-timing correction control will now be explained based on the flow chart in Figure 5.

When control is commenced, first the variable (flag) I is set to 0, and then readout is taken of the factors that express the operating condition such as the engine rpm N and the throttle aperture θ from the foregoing crank angle sensor (rpm detection means) 9 and the throttle aperture sensor (aperture detection means), and based on the engine rpm N, the throttle aperture θ₀ threshold value is set for the commencement of the ignition-timing control (steps S1 - S3).

The foregoing variable I is used to determine the cycle at which the ignition correction control will be performed. Here, the foregoing ignition-timing correction will be performed curing each cycle, so that the foregoing variable will either be 0 or 1; the ignition-timing correction control will only be performed when it is 1.

Next, a comparison is made between the θ₀, which was set above, and the throttle aperture θ. If θ is less than θ₀, the ignition timing (crank angle) IGT is set based upon the engine rpm, throttle aperture and ignition timing three-dimensional map, and the foregoing variable I is set to 0 (steps S5, S6).

The ignition circuit 26 is controlled by the foregoing control unit 18, and the spark ignition is performed at the standard ignition timing that was set as above (step S7). After that, if a stop condition is received, such as the ignition key being turned off, the engine control is halted. If there is no such input, there is a return to the foregoing step S2, where the foregoing processing is performed anew (step 8).

Also, if, in the foregoing step S4, the instantaneous throttle aperture θ is greater than the threshold aperture θ₀ that was set above, then the standard ignition timing IGT is set using the above described three-dimensional map (step S9). At this time, if the foregoing variable I is 0, I is set to 1 (steps S10, S11), and the ignition takes place according to the foregoing standard ignition timing (step S7).

Also, if in the foregoing step S10, the variable I is not 0, the foregoing standard ignition timing IGT is delayed by a specific delay angle ΔIGT to set a new corrected ignition timing IGT' (steps S10, S12). Then the foregoing variable I is set to 0 and the procedure moves to the foregoing step S7, where ignition takes place at the foregoing corrected ignition timing.

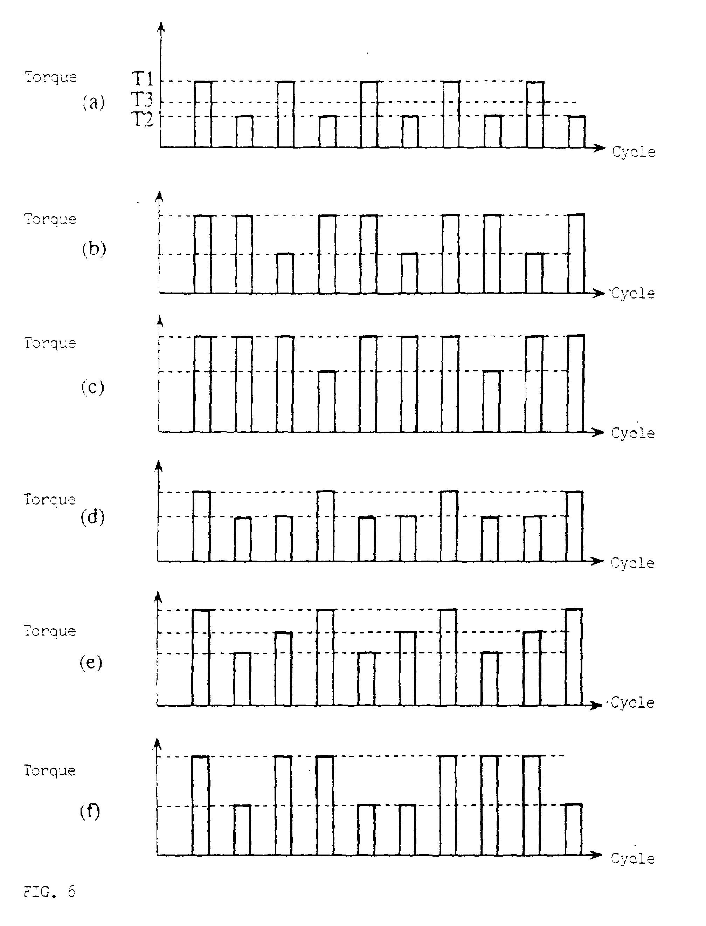

Thus, in the present embodiment, since, when the variable I is 0, not only is the ignition performed at the standard ignition timing, but the I is set to 1, and when the variable I is 1, not only is the foregoing standard ignition timing delayed by a specific crank angle, but the foregoing I is set to 0, whereby, as shown in Figure 4, the combustion pressure is lower when the ignition timing is IGT' than when it takes place at the standard ignition time IGT. As shown in Figure 6, the torque T2 when the ignition timing is corrected is lower than the torque T2 when firing takes place at the standard ignition timing, thereby generating a torque magnitude. As a result, there is an improved sensation of traction, and by extension, of acceleration when operating in the low to mid speed, mid to high load operating ranges. This feature makes it possible to prevent engine stalling when there is a temporary increase in load such as when climbing hills or riding over rocks. This aspect is particularly important for motorcycles that are designed to be ridden over rough terrain; these are frequently used to ride over rocks and stones at low speeds. By incorporating the ignition-timing control apparatus in the present embodiment, it is possible for them to run over such terrain differentials as large stones and rough ground.

The technology is not limited to motorcycles, it is also useful in small vehicles that require mobility such as snowmobiles that ride over rough terrain, and jet skis and small boats that run over waves. The method is also effective on general purpose engines that are used as drive source in applications where loads can change rapidly.

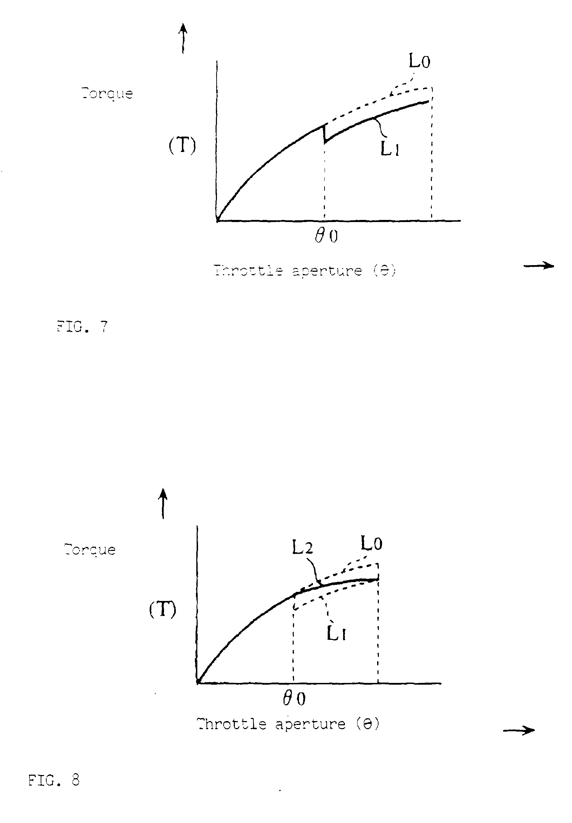

As is shown in Figure 6, when the foregoing ignition-timing correction control is initiated, the torque for that one cycle decreases to T2, causing the average torque to decline to T3. As is shown by the solid line L1 in Figure 7, when the throttle aperture is θ₀, the engine torque declines temporarily. The broken line L₀ shown in Figure 7 represents uncorrected ignition timing.

The temporary decline in the engine torque can be easily corrected by the rider slightly opening the throttle grip, but it is also possible to avoid this decline in torque by using the following ignition-timing correction control, or by adopting a control that increases the amount of fuel injected.

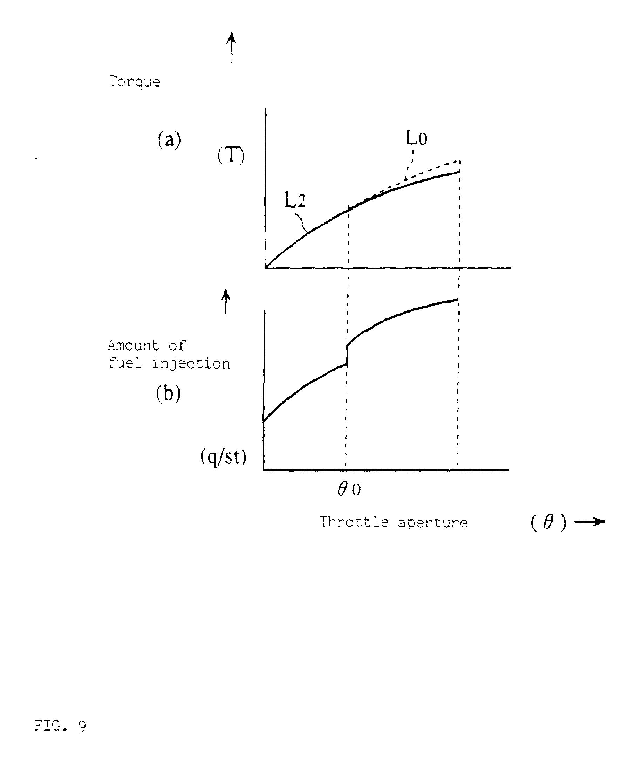

First, when using correction of the ignition timing, in cases where the foregoing throttle aperture θ exceeds the threshold aperture θ₀, the smaller said aperture θ, the more control would be exercised to slightly decrease the foregoing delay angle correction ΔIGT. This design prevents the kind of rapid decrease in torque that is shown by the solid line L2 in Figure 8.

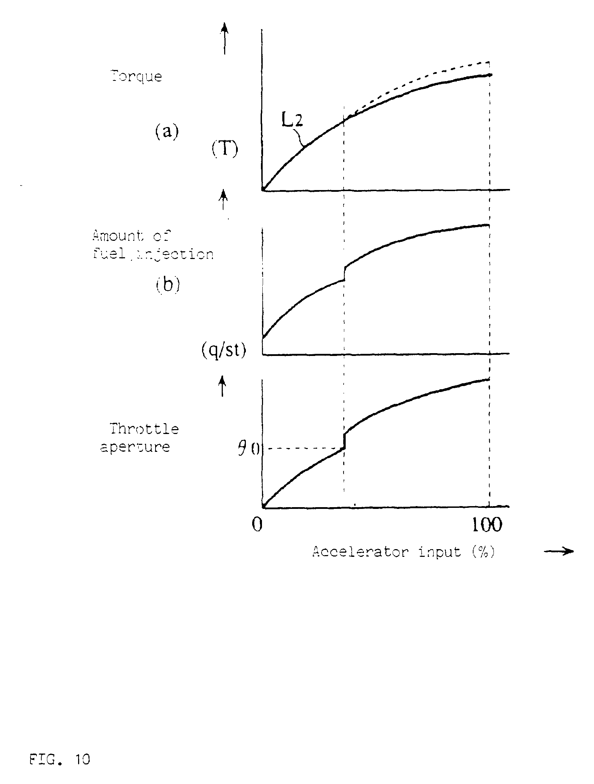

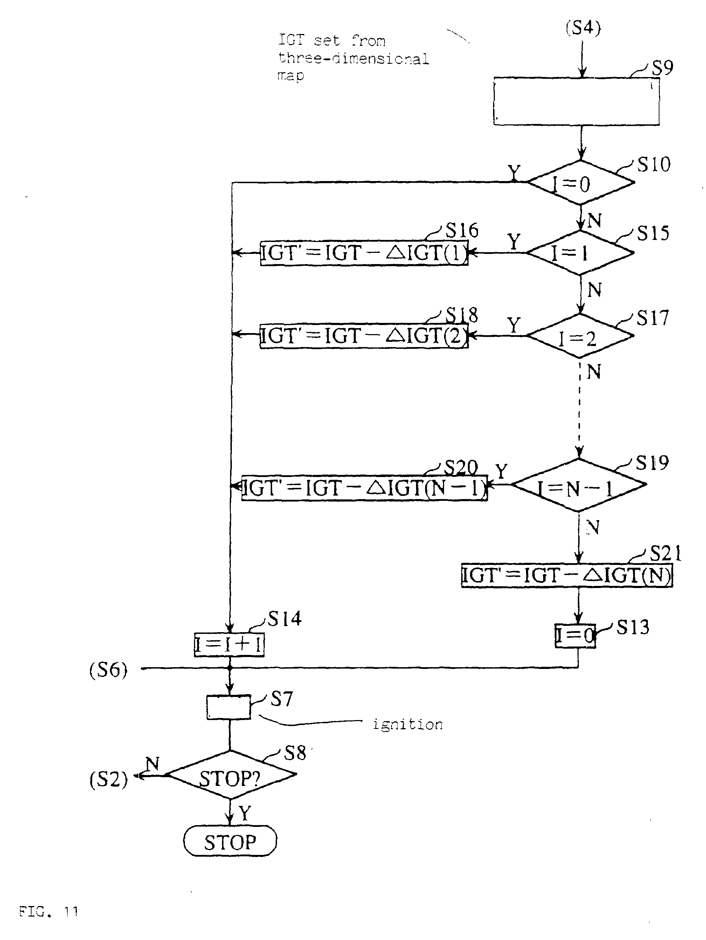

Also, using the method of control that increases the amount of fuel supplied, as is shown in Figures 9(b) and 10(b), when the foregoing throttle aperture (θ) is θ₀, the amount of fuel injected (q) is temporarily increased. As is shown in Figures 9(a) and 10(a), this design prevents the rapid decline in torque.

With regard to the specific method of increasing the fuel supply, either of two methods may be used: as shown in Figure 9, the structure is such that the throttle grip 24 is operated to directly rotate the throttle valve 21, and if the throttle grip exceeds the aperture θ₀, the amount of fuel injection is increased irrespective of the throttle valve aperture; or, as shown in Figure 10, based upon the degree to which the throttle grip 24 is operated, an actuator is used to open or close the foregoing throttle valve 21, and when the throttle grip exceeds an aperture of θ₀, then not only is the throttle valve aperture temporarily increased, but the amount of fuel supply is increased as well.

The explanation of the foregoing embodiment was based upon correcting the ignition timing for each cycle, but as is shown in Figure 6 (a) - (c), it is also possible to apply the ignition correction to the desired number *N* of cycles. Figure 6(d) shows the desired number *N* of cycles being (*N*-1) for correcting the ignition timing; Figure 6(e) shows varying the extent of the delay angle; and Figure 6(f) shows an irregular adjustment being performed. Thus, various implementations are possible.

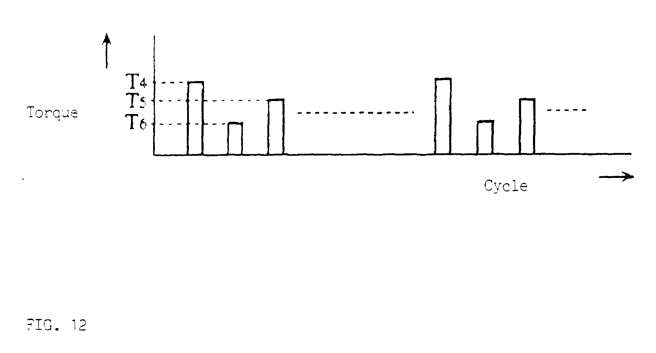

Specific examples for the case of varying the extent of the delay will be explained with reference to Figures 11 and 12.

In Figure 5, if in step S4, when the throttle aperture θ exceeds the threshold aperture θ₀, the procedure moves to step S9 of Figure 11, where the standard ignition timing is set. Then, in step S10 and thereafter, the cycle number shown by variable I is counted for specific number *N* of cycles, and then the ignition timing is corrected by correction value ΔIGT (I) at that cycle number, to implement the variable control.

Specifically, when the foregoing variable I is 0, then said variable I is set to 1, and then the ignition takes place at the foregoing standard ignition timing (steps S10, S14, S7).

Also, if the foregoing variable is not 0, but rather is 1 (step S15), the foregoing corrected ignition-timing correction is set to IGT' = IGT-ΔIGT (1), and the variable I is set to 2 (steps S16, 14), and from step S7 forward, when variable I = 1, ignition takes place at the foregoing corrected ignition timing.

Also, even when the foregoing variable is 0, not 1 or 2 (step S17), the foregoing corrected ignition timing is set to IGT' = IGT-ΔIGT (2), and I is set to 3 (steps S18, S14), and from the foregoing step S7 forward, the ignition takes place at the foregoing corrected ignition timing.

In the same way when the foregoing variable I = *N* - 1 (step S19), the foregoing corrected ignition timing is set to IGT' = IGT-Δ IGT (*N*-1), and I is set to N (steps S20, S14), then the foregoing processing after step S7 is performed.

Then, when the foregoing variable I is not 0 through (*N*-1), in other words, when I = N, then the foregoing corrected ignition timing is set to IGT' = IGT-Δ IGT (N), and I is set to 0 (steps S21, S12), wherepon the processing from step S7 forward is performed.

As is shown in Figure 12, the result of performing the control of Figure 11 is that the torque varies between T4 and T6 for each cycle. Not only are effects similar to the above obtained, but the an engine torque is realized that is more appropriate to the operating conditions.

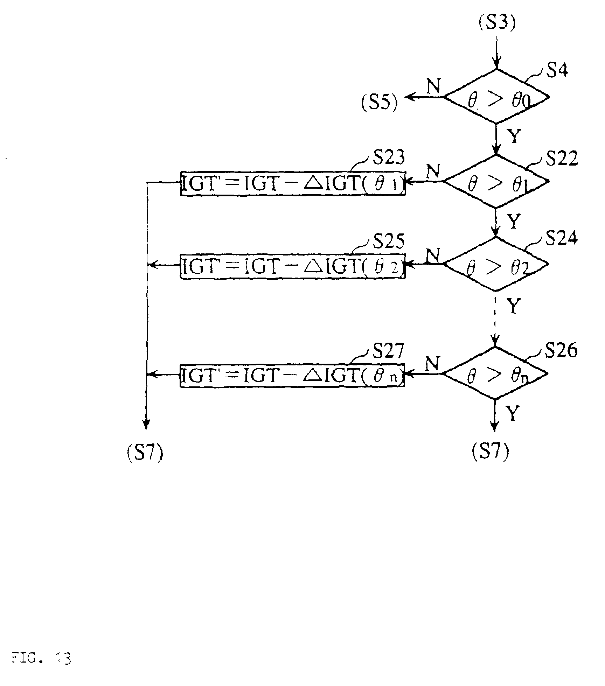

In the example of Figure 11, the foregoing correction ΔIGT is set accoding to the cycle number, but it would also be possible to have the foregoing correction amount set according to the magnitude of the load. Specifically, as shown in Figure 13, the processing for the setting of the ignition-timing correction can be based upon the results of a comparison of the throttle aperture (load) θ with the threshold aperture θ₁ through θₙ between steps S4 and S9 in Figure 5.

More specifically, when θ > θ₀, and not θ > θ₁, in other words, when θ is between θ₀ and θ₁, then the foregoing corrected ignition timing is set to IGT' = IGT-ΔIGT(θ₁) (steps S22, S23). Also, when θ >θ₁, not θ > θₙ₋₁ (θ = θ₁ to θ₂), then the foregoing ignition-timing correction is set to IGT' = IGT-ΔIGT (θ₂) (step S24, S25). Similarly, when θ > θₙ₋₁ and not θ > θₙ, the foregoing corrected ignition timing is set to IGT' = IGT-ΔIGT(θₙ) (steps S26, S27).

Thus, even in the case where the ignition-timing correction is set on the basis of the magnitude of the load, effects similar to those described above may be obtained, and as shown in Figure 3, it is possible to improve the sensation of torque by exercising control over a broad load range.

Further, in a manner similar to the above described method whereby the ignition-timing correction amount is controlled according to the cycle number and load magnitude. it is also possible to control the foregoing ignition timing adjustment amount based upon the engine rpm. whereby the sensation of torque can also be improved similarly.

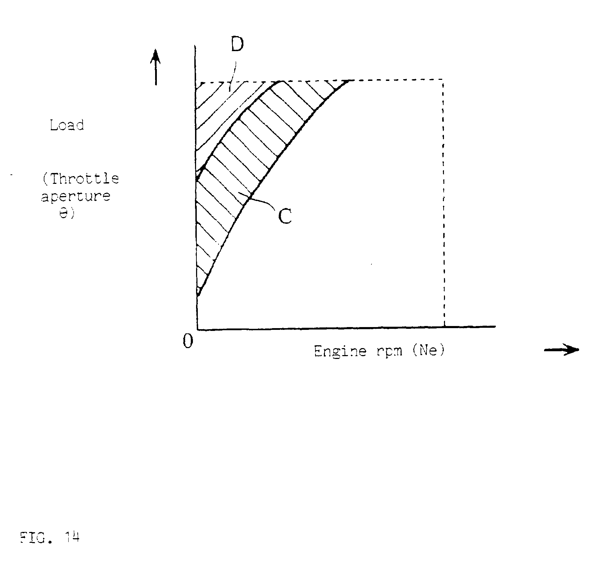

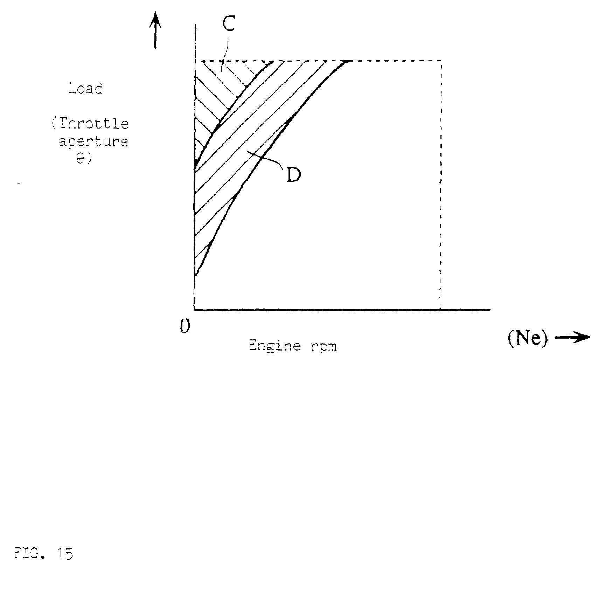

Still further, it is possible to perform control of the foregoing ignition-timing correction on the basis of both the engine rpm and load; specifically, as shown in Figures 14 and 15, the torque magnitude in range C can be controlled to be lower than that in range D. Thus, by correcting the amount of ignition timing based upon both the engine rpm and load in this manner, which by extension, controls the torque magnitude of the engine, it is possible to improve the sensation of torque in a manner similar to that described above.

It is further possible to limit the exercise of control over the correction of the ignition timing to periods of operational transition by the engine, such as when it is accelerating. This method especially improves the sensation of acceleration.

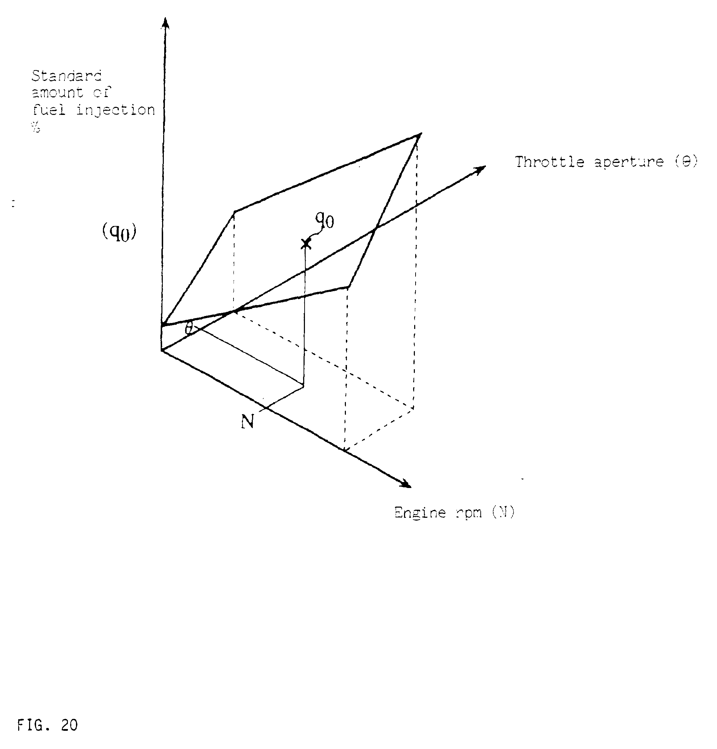

Another embodiment will be described hereinafter with respect to figures 16 to 25.

Next, the fuel-injection control performed by the foregoing control unit 18 will be explained.

First the optimal standard amount of fuel injection is determined from a three-dimensional map of engine rpm, throttle aperture and rate of fuel injection for the engine operating state based upon the engine rpm N and the throttle aperture θ (load), and then fuel injection control is carried out by controlling the fuel-injection valve to inject said standard amount.

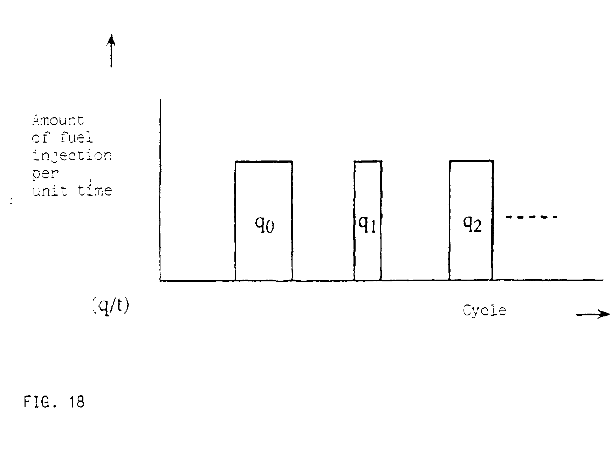

On the other hand, as is shown by the shaded area in Figure 16 with diagonal lines, when the engine rpm is in the low to mid-range level, and when the engine load is in the mid to high load level, that is above the threshold value θ₀ in the figure, then to generate a torque magnitude, as shown in Figure 18 a control adjustment is made to correct the standard amount of fuel injection by increasing or decreasing that amount for a certain number of cycle(s) (for example, each cycle).

The correction of the amount of fuel injection is implemented by controlling the opening time for the foregoing fuel-injection valve 29.

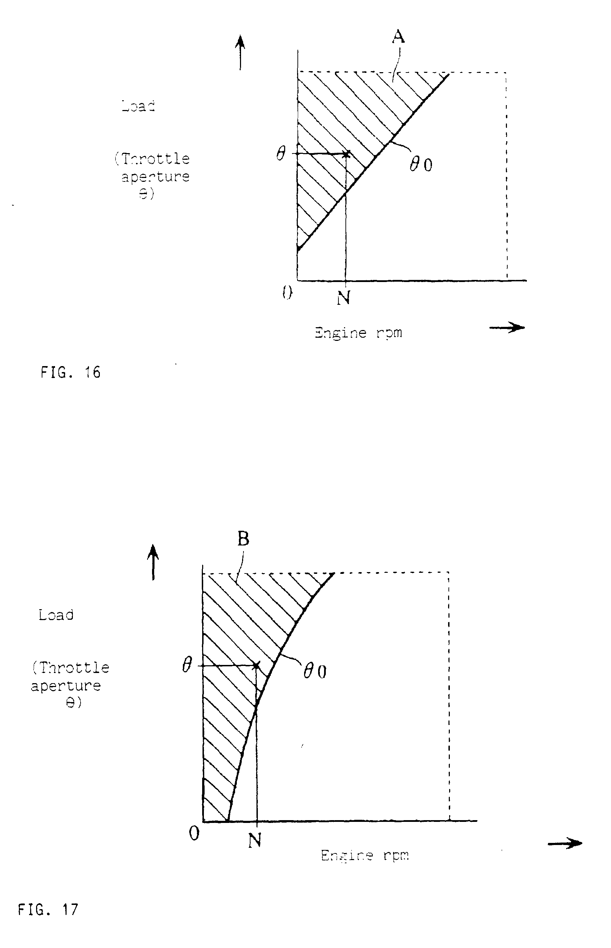

The operating range over which the foregoing fuel injection amount correction control is performed can be appropriately varied according to the engine's application or its characteristics. For example, the correction control could be exercised over the operating range indicated by the shaded area B in Figure 17. In this example, the correction control is exercised even in the no-load range when the rpm is below a certain level.

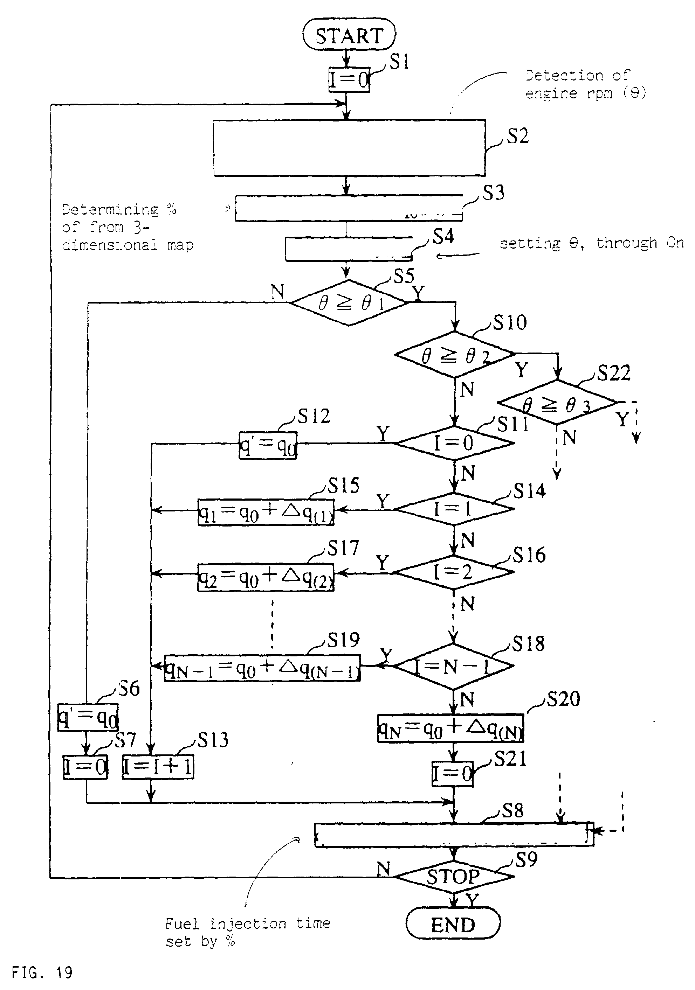

The foregoing correction control of the amount of fuel injection will now be explained in detail based on the flow chart in Figure 19.

When control is started, first the variable (flag) I is set to 0, and then readout is taken (step S1, S2) of the factors that express the operating state: the engine rpm N is determined from the foregoing crank angle sensor (rpm detection means) 9 and the throttle aperture 6 is detected by the throttle aperture sensor (aperture detection means) 27. The foregoing variable I is the cycle number used to determine the corrected amount for the correction of the amount of fuel injection. When I = 0, no correction is performed; when I = I through N, the amount of injection is controlled based upon said cycle number.

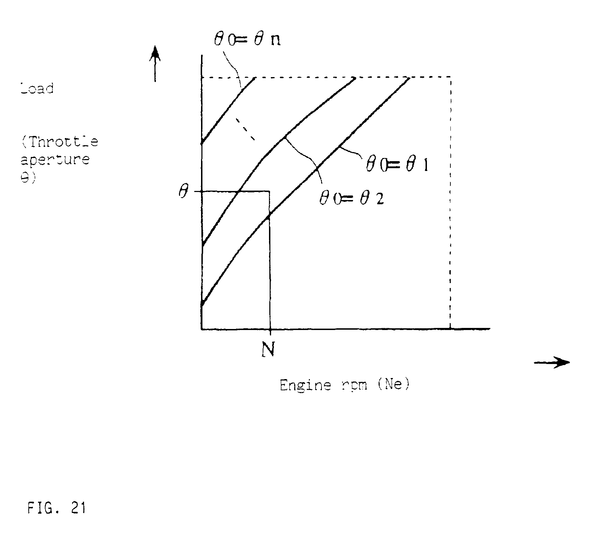

The standard amount of fuel injection q₀ is set (step S3) based upon the reading of the foregoing engine rpm N and throttle aperture θ and the referencing of the three dimensional map of the engine rpm - throttle aperture - standard amount of fuel injection that is shown in Figure 6. Further, the threshold value for throttle aperture θ₁ through θₙ is set (step S4) based upon the graph of characteristics shown in Figure 21.

Next, the amount of correction for the fuel injection is determined by comparing the results of the current throttle aperture θ with the prescribed threshold aperture that was determined above. Specifically, if θ is smaller than θ₁, the foregoing standard amount of fuel injection q₀ is left the same with the fuel injection amount being q', and, the foregoing variable I is set to 0 (steps S5-S7).

Then, the fuel injection supply time is set according to the amount of fuel injection q'; the foregoing fuel-injection valve 29 injects fuel for that time (step S8). After that, should there be a stall condition such as the ignition key being OFF, then the engine control would be halted, but if there is no such input, the control returns to step S2, where the foregoing processing occurs (step S9).

Also, in the foregoing step S5, when the current throttle aperture θ is greater that the throttle aperture θ₁ set as above, then θ is compared with θ₂ (step S10)

When this θ is smaller than θ₂, and when the cycle number shown by the variable I is counted up to the specified variable N, then the amount of correction Δ q (I) for the fuel injection at this cycle number is set. The control for this corrected amount is performed by controlling the opening timing for the foregoing fuel-injection valve 29.

More specifically, if the foregoing variable I is 0, then I is set to 1, and in addition, the foregoing standard amount of fuel injection q₀ is injected by the foregoing fuel-injection valve 29 (steps S11-S13, S8).

Also, if the variable I in the foregoing step S11 is not 0, and if I is determined to be 1 in step S14, then a correction is made from the standard amount of fuel injection q₀ to a new fuel injection amount q' that has been adjusted by the prescribed amount Δ q (1) (steps S14, S15). Then, 1 is added to the foregoing variable I, and in addition (step S13), the program moves to the foregoing step S8, where the fuel is injected for just the fuel supply time that is set by the foregoing fuel injection amount q'. The amount of the foregoing fuel-injection correction (Δq(1) through Δq(n)) is set according to a three dimensional map in the foregoing control unit's 18 memory of N pages of engine rpm - throttle aperture - amount of fuel-injection correction.

Also, if the variable I is not 1 in step S13, and if in step S16 I is determined to be 2, then the foregoing standard amount of fuel injection q₀ is corrected by the prescribed fuel amount Δ q (2) to cause the amount of fuel injection to be newly set to the fuel injection amount q' (steps S16, S17). Then, 1 is added to the variable I and the program moves to the foregoing step S8, where fuel is injected for a time set by the foregoing fuel injection amount q'.

Similarly, when the foregoing variable I is (N-1), the foregoing standard amount of fuel injection q₀ is adjusted by the corrected fuel amount Δq (N-1) and a new fuel injection amount q' is set (steps S17, S18). Then, 1 is added to the foregoing variable I, and the program moves to step S8, where the foregoing amount of fuel injection q' is injected.

Then, when the foregoing variable I is not 0 through (N-1), to wit, when I is N, then the foregoing amount of fuel injection q' is adjusted from the standards amount of fuel injection q₀ by the prescribed corrected fuel amount Δq (N), and a new q' is set for the amount of fuel injection (step S20). Then, the foregoing variable I is set to 0 and (step S21), the program moves to the foregoing step S8, where the foregoing amount of fuel injection q' is injected.

Here, if in step S10, the foregoing θ is greater than θ₃, this θ is compared successively with the foregoing specific threshold apertures θ₄ through Oₙ, and the amount of fuel injection is set in the same way as described above.

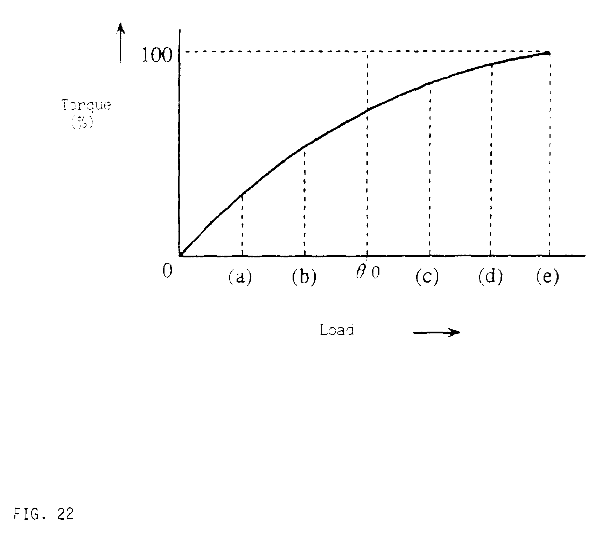

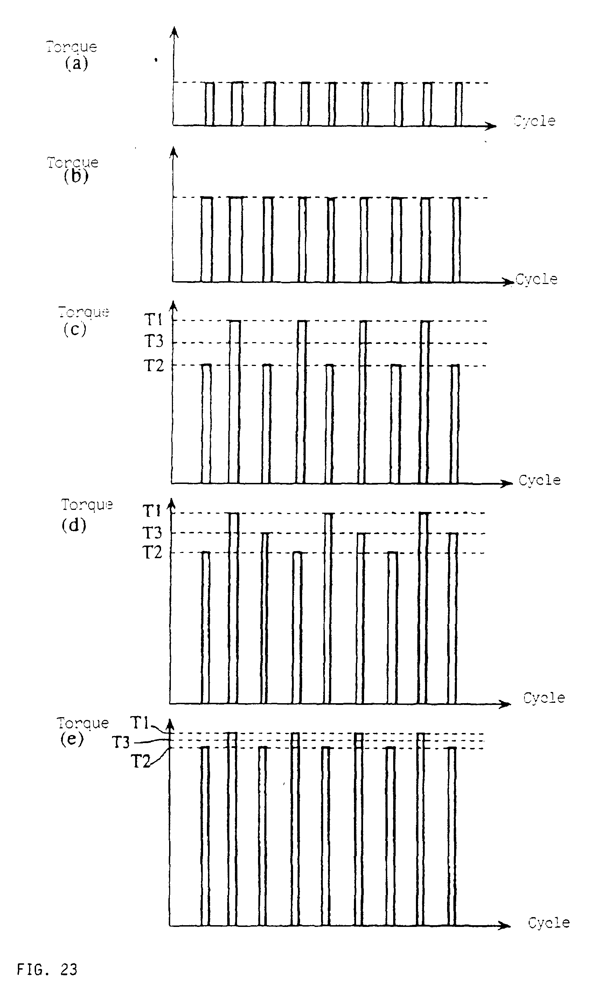

Thus, in the present embodiment, when the variable I is 0, the standard amount of fuel is injected and the I is set to 1; when the variable I is 1, then the foregoing standard amount of fuel is corrected and the corrected amount is injected, and 1 is added to the foregoing variable I. This correction of the amount of fuel continues until the variable I reaches N, which, as shown in Figure 22 (a), (b) when outside the foregoing correction load range, generates torque of the same magnitude for each engine cycle as shown in Figure 23 (a), (b). In the foregoing correction load range shown in Figure 22 (c), (d) and (e), a different magnitude of torque T1, T2 is generated for each engine cycle, thereby generating a torque magnitude.

As a result, during low to mid speeds and under mid to high load operating ranges, there is an improved bodily sensation of traction and, by extension, acceleration. Furthermore, the engine is prevented from stalling in response to temporary increased loads such as encountered when climbing hills or riding over rocks. In particular, with regard to motorcycles that are made to run over rough terrain, they are often used to ride over rocks and stones, and a great deal of torque is required during the moment they are riding over them. Incorporating an ignition timing apparatus in the present invention makes it possible to climb over a higher terrain differential or over a larger rock when riding over rough terrain.

This design is effective not just for motorcycles, but for other transport vehicles requiring high mobility such as snowmobiles which have to ride over bumpy terrain, or small boats that ride over waves. This design is also effective on engines used in conventional automobiles that are driven where there are rapid variations in load.

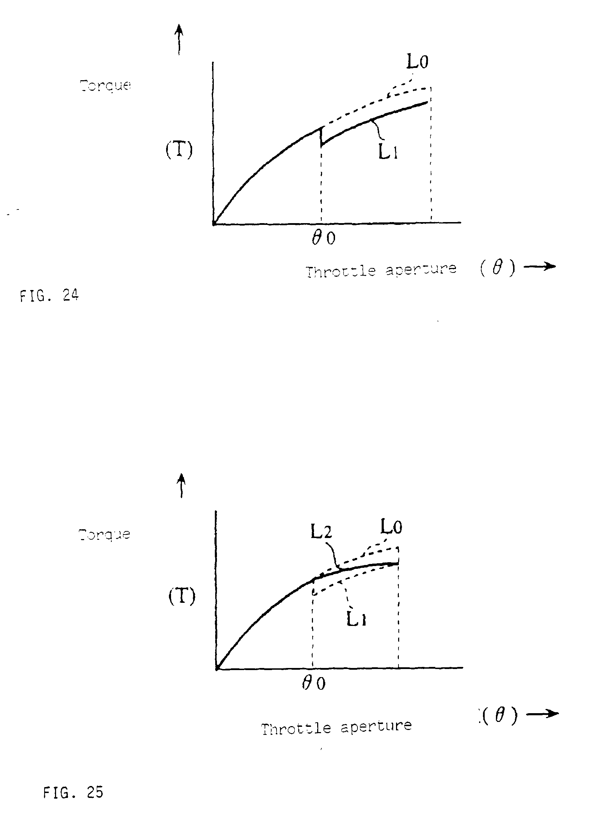

When the foregoing correction control on the amount of fuel injection is begun, as is shown in Figure 23 (c), (d) and (e), the torque per cycle decreases from T1 to T2 to an average torque T3 that is lower. As shown by the solid line L1 in Figure 24 when the throttle aperture is θ₀, the engine torque will decline temporarily. The dotted line L0 in Figure 24 shows the behavior when the correction control over the amount of fuel injection is not being performed.

This temporary decline in the engine torque can be easily corrected by the rider slightly opening the throttle grip, but it is also possible to avoid this decline in torque by using the following method to control the correction of the fuel injection. To wit, when the foregoing throttle aperture θ exceeds the threshold aperture θ₀, a method can be used wherein the smaller the said aperture θ, the less the foregoing correction Δq. This feature, as is shown by the solid line L2 in Figure 25 prevents the torque from declining rapidly.

## Claims

1. Control method for an internal combustion engine, in particular a two-stroke internal combustion engine, in response to engine operation conditions wherein the combustion cycles are controlled individually and the torque generated by subsequent combustion cycles is varied, wherein an engine speed (N) and an actual throttle aperture (θ) are detected, at least one throttle aperture threshold value (θ₀) is determined on the basis of the engine speed (N), and the throttle aperture (θ) and said at least one threshold value (θ₀) are compared, if a condition is detected in which the throttle aperture (θ) is greater than the threshold value (θ₀) the ignition timing is delayed and/or the amount of fuel supplied is corrected in a corresponding combustion cycle.

2. Control method according to claim 1, wherein the combustion cycles are controlled individually at low to mid speed and mid to high load.

3. Control method according to claim 1 or 2, wherein a flag is set, in order to control said ignition timing in subsequent cycles and wherein said flag can take at least two flag values (I), each flag value corresponds to a predetermined ignition timing, the flag value (I) is changed each time the condition throttle aperture (θ) greater than threshold value (θ₀) has been deleted.

4. Control method according to one of the preceding claims 1 to 3, wherein further throttle aperture threshold values (θᵢ; i = 1 to n) are set and subsequently compared with the actual throttle aperture (θ), and when a condition (θ) greater than at least one of said threshold values (θ₀,θᵢ) has been detected the ignition timing is delayed in a corresponding combustion cycle in response to the greatest threshold value (θ₀, θᵢ) for which the condition actual throttle aperture (θ) greater than threshold value (θ₀, θᵢ) is true.

5. Control method according to claim 4, wherein if a condition throttle aperture (θ) greater than said at least one threshold value (θᵢ) is detected the amount of fuel supplied to a cylinder is corrected for a corresponding combustion cycle with respect to a standard amount of fuel to be supplied by increasing or decreasing that amount.

6. Control method according to claim 5, wherein a flag is set, in order to control said amount of fuel to be supplied in subsequent cycles and wherein said flag can take at least two flag values (I), each flag value corresponds to a predetermined amount of fuel, the flag value is changed each time the condition throttle aperture (θ) greater than at least one of said threshold values (θᵢ) has been detected.

7. Control method according to claim 5 or 6, wherein the actual throttle aperture (θ) is compared with said at least one threshold value (θᵢ) one after the other, with the threshold values (θᵢ) increasing in the order they are compared with the actual threshold value (θ), the amount of fuel to be injected is determined in response to the largest of said threshold values (θᵢ) for which the condition actual throttle aperture (θ) greater than threshold value is true.

8. Control method according to claim 7, wherein the amount of fuel to be injected is determined in response to the largest threshold value (θᵢ) and one flag value of several flag values for the respective threshold value (θᵢ).

9. Internal combustion engine, in particular two-stroke internal combustion engine having means (9) for detecting the operating conditions of the engine, wherein said operating state detection means comprises a RPM detection means (9) that detects the engine RPM, means for generating at least one standard engine control parameter, means for correcting said at least one engine control parameter to thereby vary the torque generated by subsequent combustion cycles,
**characterized in that** said operating state detection means (9) comprises an aperture detection means (27) that detects a throttle aperture (θ), means for generating at least one throttle aperture threshold (θ₀) on the basis of said engine RPM (N) detected and comparing same with the actual throttle aperture (θ), that said means for correcting said at least one standard control parameter is capable, if the throttle aperture (θ) detected is larger than the threshold throttle aperture (θ₀) generated, to delay the ignition timing and/or to correct the amount of fuel supplied in a corresponding combustion cycle.

10. Internal combustion engine according to claim 9, wherein said standard control parameter generating means comprises ignition timing control means for controlling a standard ignition timing in response to the operating state detected and said standard control parameter correcting means comprises means for correcting the foregoing standard ignition timing towards the delay side for a specific cycle to generate a corrected torque over a predetermined operating range.

11. Internal combustion engine according to claim 9 or 10, wherein said standard control parameter generating means comprises fuel injection control means controlling a standard amount of fuel injected in response to the operating state detected, and said standard control parameter correcting means comprises fuel injection correction means correcting the foregoing standard amount of fuel for a specific cycle to generate a corrected torque over a predetermined range of operation.

12. Internal combustion engine according to one of the preceding claims 9 to 11, wherein said standard control parameter correcting means is active under low to mid speed RPM and mid to high load operation conditions to perform the standard control parameter correction.

## Patentansprüche

1. Steuerverfahren für eine Brennkraftmaschine, insbesondere für eine Zweitakt-Brennkraftmaschine, in Abhängigkeit von Motorbetriebsbedingungen, wobei die Verbrennungszyklen individuell gesteuert werden und das durch die anschließende Verbrennung erzeugte Drehmoment verändert wird, wobei eine Motordrehzahl (N) und eine tatsächliche Drosselöffnung (θ) erfasst werden, zumindest ein Drosselöffnungsgrenzwert (θ₀) auf der Grundlage der Motordrehzahl (N) bestimmt wird, und die Drosselöffnung (θ) und dieser zumindest eine Grenzwert (θ₀) verglichen werden, wobei falls ein Zustand erfasst wird, in der die Drosselöffnung (θ) größer ist als der Grenzwert (θ₀), der Zündzeitpunkt verzögert wird und/oder die Menge des zugeführten Kraftstoffes in einem entsprechenden Verbrennungszyklus korrigiert werden.

2. Steuerverfahren nach Anspruch 1, wobei die Verbrennungszyklen bei niedriger bis mittlerer Drehzahl und mittlerer bis hoher Belastung individuell gesteuert werden.

3. Steuerverfahren nach Anspruch 1 oder 2, wobei ein Zeichen gesetzt wird, um den Zündzeitpunkt in nachfolgenden Zyklen zu steuern und wobei das Zeichen zumindest zwei Zeichenwerte (I) annehmen kann, wobei jeder Zeichenwert einem vorbestimmten Zündzeitpunkt entspricht, der Zeichenwert (I) jedes Mal verändert wird, wenn der Zustand Drosselöffnung (θ) größer als Grenzwert (θ₀) gelöscht worden ist.

4. Steuerverfahren nach einem der Ansprüche 1 bis 3, wobei weitere Drosselöffnungs-Grenzwerte (θᵢ; i = 1 bis n) festgelegt und anschließend mit der tatsächlichen Drosselöffnung (θ) verglichen werden, und wenn ein Zustand (θ) größer als zumindest einer der Grenzwerte (θ₀, θᵢ) erfasst worden ist, der Zündzeitpunkt in einem anschließenden Verbrennungszyklus in Abhängigkeit von dem größten Grenzwert (θ₀, θᵢ), für den gilt, dass der Zustand der tatsächlichen Drosselöffnung größer als der Grenzwert (θ₀, θᵢ) ist, verzögert wird.

5. Steuerverfahren nach Anspruch 4, wobei falls ein Zustand Drosselöffnung (θ) größer als zumindest ein Grenzwert (θᵢ) erfasst wird, die Menge des zu einem Zylinder zugeführten Kraftstoffes für einen entsprechenden Verbrennungszyklus in Bezug auf eine zuzuführende Standardmenge von Kraftstoff durch Erhöhung oder Verminderung dieser Menge korrigiert wird.

6. Steuerverfahren nach Anspruch 5, wobei ein Zeichen gesetzt wird, um die in anschließenden Zyklen zuzuführende Kraftstoffmenge zu steuem und wobei das Zeichen zumindest zwei Zeichenwerte (I) annehmen kann, wobei jeder Zeichenwert einer vorbestimmten Kraftstoffmenge entspricht, der Zeichenwert jedes Mal verändert wird, wenn der Zustand Drosselöffnung (θ) größer als zumindest einer der Grenzwerte (θᵢ), erfasst worden ist.

7. Steuerverfahren nach Anspruch 5 oder 6, wobei die tatsächliche Drosselöffnung (θ) mit dem zumindest einen Grenzwert (θᵢ) einem nach dem anderen verglichen wird, wobei die Grenzwerte (θᵢ) sich in der Reihenfolge erhöhen, wie sie mit dem tatsächlichen Grenzwert (θ) verglichen werden, wobei die Kraftstoffmenge, die eingespritzt wird, in Abhängigkeit von dem größten der Grenzwerte (θᵢ) bestimmt wird, für den der Zustand tatsächliche Drosselöffnung (θ) größer als der Grenzwert gilt.

8. Steuerverfahren nach Anspruch 7, wobei die einzuspritzende Kraftstoffmenge in Abhängigkeit von dem größten Grenzwert (θᵢ) und einem Zeichenwert von mehreren Zeichenwerten für den jeweiligen Grenzwert (θᵢ) bestimmt wird.

9. Brennkraftmaschine, insbesondere Zweitakt- Brennkraftmaschine, die eine Einrichtung (9) aufweist, um die Betriebszustände des Verbrennungsmotors zu erfassen, wobei die Betriebszuständ- Erfassungseinrichtung eine Drehzahl- Erfassungseinrichtung (9) aufweist, die die Motordrehzahl erfasst, eine Einrichtung, um zumindest einen Standard- Motorsteuerparameter zu erzeugen, eine Einrichtung zum Kopieren des zumindest einen Motor- Steuerparameters, um dadurch das Drehmoment, erzeugt durch anschließende Verbrennungszyklen, zu verändern,
**dadurch gekennzeichnet, dass** die Betriebszustand- Erfassungseinrichtung (9) eine Öffnungs- Erfassungseinrichtung (27) aufweist, die eine Drosselöffnung (θ) erfasst, eine Einrichtung zum Erzeugen von zumindest einem Drosselöffnungsgrenzwert (θ₀) auf der Grundlage der erfassten Motordrehzahl (N), und vergleichen derselben mit der tatsächlichen Drosselöffnung (θ), dass die Einrichtung zum Korrigieren des zumindest einen Standard- Steuerparameters in der Lage ist, dann, wenn die erfasste Drosselöffnung (θ) größer ist als die erzeugte Grenzwertöffnung (θ₀), den Zündzeitpunkt zu verzögern und / oder in einem entsprechenden Verbrennungszyklus die zugeführte Kraftstoffmenge zu korrigieren.

10. Brennkraftmaschine nach Anspruch 9, wobei die Standardsteuerparameter- Steuereinrichtung eine Zündzeitpunkt- Steuereinrichtung aufweist, um einen Standardzündzeitpunkt in Abhängigkeit von dem erfassten Betriebszustand zu steuern und die Standardsteuerparameter- Korrektureinrichtung eine Einrichtung aufweist, um den vorhergehenden Standardzündzeitpunkt in Richtung der Verzögerungsseite für einen bestimmten Zyklus zu korrigieren, um ein korrigiertes Drehmoment über einen vorbestimmten Betriebsbereich zu erzeugen.

11. Brennkraftmaschine nach Anspruch 9 oder 10, wobei die Standardsteuerparameter- Erzeugungseinrichtung eine Kraftstoffeinspritzsteuereinrichtung aufweist, die eine Standardkraftstoffmenge in Abhängigkeit von dem erfassten Betriebszustand steuert und die Standardsteuerparameter- Korrektureinrichtung eine Kraftstoffeinspritzkorrektureinrichtung aufweist, die die vorhergehenden Standard- Kraftstoffmenge für einen speziellen Zyklus korrigiert, um ein korrigiertes Drehmoment über einen vorbestimmten Betriebsbereich zu erzeugen.

12. Brennkraftmaschine nach einem der vorhergehenden Ansprüche 9 bis 11, wobei die Standardsteuerparameter- Korrektureinrichtung unter niedrigen bis mittleren Motordrehzahlen und bei mittleren bis hohen Belastungsbetriebszuständen aktiv ist, um die Standardsteuerparameterkorrektur auszuführen.

## Revendications

1. Procédé de régulation pour moteur à combustion interne, en particulier un moteur à combustion interne à deux temps, en réponse à des conditions de fonctionnement du moteur dans lesquelles les cycles de combustion sont régulés de manière individuelle et le couple généré par les cycles de combustion qui suivent est modifié, dans lequel une vitesse de rotation du moteur (N) et une ouverture réelle de papillon des gaz (θ) sont détectées, au moins une valeur de seuil d'ouverture de papillon des gaz (θo) est déterminée sur la base de la vitesse de rotation du moteur (N), et l'ouverture de papillon des gaz (θ) et ladite au moins une valeur de seuil (θo) sont comparées, s'il est détecté une condition dans laquelle l'ouverture de papillon des gaz (θ) est supérieure à la valeur de seuil (θo) le calage à l'allumage est retardé et / ou la quantité de carburant à fournir est corrigée dans un cycle de combustion correspondant.

2. Procédé de régulation selon la revendication 1, dans lequel les cycles de combustion sont régulés de manière individuelle à des vitesses de rotation basses à intermédiaires et à des charges intermédiaires à élevées.

3. Procédé de régulation selon les revendications 1 ou 2, dans lequel un indicateur est ajusté de manière à réguler ledit calage à l'allumage dans les cycles qui suivent et dans lequel ledit indicateur peut prendre au moins deux valeurs d'indicateur (I), chaque valeur d'indicateur correspond à un calage à l'allumage prédéterminé, la valeur d'indicateur (I) est modifiée chaque fois que la condition d'ouverture de papillon des gaz (θ) supérieure à une valeur de seuil (θo) a été détectée.

4. Procédé de régulation selon l'une des revendications précédentes 1 à 3, dans lequel d'autres valeurs de seuil d'ouverture de papillon des gaz (θ ᵢ : i = 1 à n) sont ajustées et sont ensuite comparées à l'ouverture réelle de papillon des gaz (θ), et lorsqu'une condition (θ) supérieure à au moins l'une desdites valeurs de seuil (θo, θ ᵢ) a été détectée, le calage à l'allumage est retardé dans un cycle de combustion correspondant en réponse à la valeur de seuil la plus élevée (θo, θ ᵢ) pour laquelle la condition réelle d'ouverture de papillon des gaz (θ) supérieure à une valeur de seuil (θo, θ ᵢ) est vraie.

5. Procédé de régulation selon la revendication 4, dans lequel, si une condition d'ouverture de papillon des gaz (θ) supérieure à ladite au moins une valeur de seuil (θ ᵢ) est détectée, la quantité de carburant alimentant un cylindre est corrigée pour un cycle de combustion correspondant par rapport à une quantité standard de carburant devant être fournie en augmentant ou en diminuant cette quantité.

6. Procédé de régulation selon la revendication 5, dans lequel un indicateur est ajusté de manière à réguler ladite quantité de carburant devant être fournie dans les cycles qui suivent et dans lequel ledit indicateur peut prendre au moins deux valeurs d'indicateur (I), chaque valeur d'indicateur correspond à une quantité de carburant prédéterminée, la valeur d'indicateur est modifiée chaque fois que la condition d'ouverture de papillon des gaz (θ) supérieure à au moins l'une desdites valeurs de seuil (θ ᵢ) a été détectée.

7. Procédé de régulation selon les revendications 5 ou 6, dans lequel l'ouverture réelle de papillon des gaz (θ) est comparée à ladite au moins une valeur de seuil (θ ᵢ), l'une après l'autre, les valeurs de seuil (θ ᵢ) augmentant dans l'ordre où elles sont comparées à la valeur réelle de seuil (θ), la quantité de carburant devant être injectée est déterminée en réponse à la valeur la plus élevée desdites valeurs de seuil (θ ᵢ) pour laquelle la condition réelle d'ouverture de papillon des gaz (θ) supérieure à une valeur de seuil est vraie.

8. Procédé de régulation selon la revendication 7, dans lequel la quantité de carburant devant être injectée est déterminée en réponse à la valeur de seuil la plus élevée (θ ᵢ) et à une valeur d'indicateur entre plusieurs valeurs d'indicateur destinée à la valeur de seuil respective (θ ᵢ).

9. Moteur à combustion interne, en particulier moteur à combustion interne à deux temps comprenant des moyens (9) destinés à détecter les conditions de fonctionnement du moteur, dans lequel lesdits moyens de détection de condition de fonctionnement comprennent des moyens de détection de vitesse de rotation (9) qui détectent la vitesse de rotation du moteur, des moyens destinés à générer au moins un paramètre standard de régulation du moteur, des moyens destinés à corriger ledit au moins un paramètre de régulation du moteur, afin de modifier ainsi le couple généré par des cycles de combustion qui suivent,
**caractérisé en ce que** lesdits moyens de détection de condition de fonctionnement (9) comprennent des moyens de détection d'ouverture (27) qui détectent une ouverture de papillon des gaz (θ), des moyens destinés à générer au moins un seuil d'ouverture de papillon des gaz (θo) sur la base de ladite vitesse de rotation du moteur (N) détectée et à comparer celle-ci à l'ouverture réelle de papillon des gaz (θ), et **en ce que** lesdits moyens destinés à corriger ledit au moins un paramètre standard de régulation sont capables, si l'ouverture de papillon des gaz (θ) détectée est supérieure à l'ouverture de seuil de papillon des gaz (θo) générée, de retarder le calage à l'allumage et / ou de corriger la quantité de carburant fournie dans un cycle de combustion correspondant.

10. Moteur à combustion interne selon la revendication 9, dans lequel lesdits moyens de génération de paramètre standard de régulation comprennent des moyens de régulation de calage à l'allumage destinés à réguler un calage à l'allumage standard en réponse à une condition de fonctionnement détectée et lesdits moyens de correction de paramètre standard de régulation comprennent des moyens destinés à corriger le calage à l'allumage standard qui précède vers une temporisation destinée à un cycle spécifique, afin de générer un couple corrigé sur une plage de fonctionnement prédéterminée.

11. Moteur à combustion interne selon les revendications 9 ou 10, dans lequel lesdits moyens de génération de paramètre standard de régulation comprennent des moyens de régulation d'injection de carburant qui régulent une quantité standard de carburant injectée en réponse à la condition de fonctionnement détectée, et dans lequel lesdits moyens de correction de paramètre standard de régulation comprennent des moyens de correction d'injection de carburant qui corrigent la quantité standard de carburant qui précède destinée à un cycle spécifique, afin de générer un couple corrigé sur une plage de fonctionnement prédéterminée.

12. Moteur à combustion interne selon l'une des revendications précédentes 9 à 11, dans lequel lesdits moyens de correction de paramètre standard de régulation sont activés dans des conditions de fonctionnement à des vitesses de rotation du moteur basses à intermédiaires et des conditions de charge intermédiaire à élevée, afin d'exécuter la correction du paramètre standard de régulation.
